# EUROPEAN PATENT SPECIFICATION

(11) **EP 1 475 214 B1**
(45) Date of publication and mention of the grant of the patent: **13.08.2008**
(21) Application number: 04101113.1
(22) Date of filing: 18.03.2004
(51) Int. Cl.: B29C 47/70, B29C 47/16

(54) **Removable flow diverter for an extrusion head**
ENTFERNBARER STRÖMUNGSVERTEILER FÜR EINE EXTRUSIONSDÜSE
DERIVATEUR D'ECOULEMENT AMOVIBLE POUR TETE D'EXTRUSION

(30) Priority: 19.03.2003 US 392069
(43) Date of publication of application: 10.11.2004
(73) Proprietor: THE GOODYEAR TIRE & RUBBER COMPANY, Akron, OH 44316-0001 (US)
(72) Inventor: Looman, Ernest Wilford, Jr., Tallmadge, OH Ohio 44278 (US); Turner, Bruce Joseph, Wadsworth, OH Ohio 44281 (US); Marshall, Malcolm George, Wadsworth, OH Ohio 44281 (US); Burg, Gary Robert, Massillon, OH Ohio 44646 (US); Stuber, Neil Phillip, Munroe Falls, OH Ohio 44262 (US)
(74) Representative: Kutsch, Bernd

(56) References cited:
- EP-A- 1 186 397
- WO-A-99/22927

## Description

### Field of the Invention

The present invention relates to an extruder with an extruder head for forming strips of polymeric material and, more particularly, to a flow diverter for use in such an extruder head for directing the flow of polymeric material through the extruder head, and to a method to make such an extruder head.

### Background of the Invention

Extruders are well known in the art for extruding strips of polymeric material, such as rubber tire treads for example, from a profile forming die. Typical extruders include a heated barrel and a screw that provides shear energy to the material to be plasticized. As the material is heated, it generally converts from a solid pellet or strip form into a plasticized material at the end of the screw tip that conveys the material into an extruder head. The extruder head generally has a flow channel comprised of one or more flow passages that direct the plasticized material through the extruder head to the profile forming die that forms the material into the proper predetermined cross-sectional profile.

Oftentimes the extruder system is of a complex nature providing two or more dissimilar materials to be extruded. In one example, a duplex tire tread can be made with a top cap material and a lower base material, each material being specifically designed for its application. In even more complex applications, a triplex extruder can be used in which the cap material and base material also have on each lateral extreme a sidewall material that is simultaneously coextruded and bonded to the other two components. All of these materials are conveyed into the extruder head that directs the materials into the flow channel which assembles and bonds them so that they come out as one or more solid singular pieces.

It is critical that the flow channel provide a balanced flow of material through the extruder head so that the rubber material flow has a velocity profile that is generally constant across the lateral length of the profiling die. Otherwise, the profiling die will have the material coming out and swelling to a larger area on one side of the die because it has a higher velocity flow rate than the material on the opposite side of the die. A secondary problem that also relates to the mass and velocity imbalance across the die is an undesirable curvature of the extrudate after it leaves the die, such that instead of obtaining a straight strip, a "banana"-shaped curved strip is obtained. This problem is also somewhat related to the velocity distribution in the material as it flows through the flow channel. If one can visualize an extrudate coming out of the die as a flat sheet, the material along the lateral edges of the die may be moving at different velocities such that one side of the extruded material will tend to bow or bend toward the other side that is moving at a slower velocity, the slower side tending to stay close to the die while the faster moving side is moving quicker away from the die. The resulting effect is a "banana" shaped curvature of the profiled component. This curvature as the component is formed is an indication that the velocities of the material are dissimilar from one side of the die to the other even though the dimensional characteristics of the profile component may seem accurate. This non-uniform velocity change causes the component to have a natural bow. In the preparation of tire treads for example, this effect can have some detrimental effect on the product quality of the resultant tire since the accuracy with which the tread can be applied to an unvulcanized tire is reduced and an asymmetry in the molded tire, know as conicity, can be created.

In order to compensate for these variations in flow velocities within an extruder head, one or more flow diverters are provided in the flow channel to vary the mass flow velocity through the flow channel. The flow diverters are machined into the flow channel which forms part of the extruder head. The flow channel may be a separate and removable component, typically made of metal such as steel, which is bolted to the extruder head. Alternatively, the flow channel and flow diverters may be machined directly into the extruder head, thereby eliminating the separate flow channel component. Each flow diverter is generally triangular in shape and includes a leading apex directed to the flow inlet end of the flow channel. Each flow diverter has a particular profile or shape, and orientation within the flow channel, so that the rubber flow has a velocity profile that is generally constant across the lateral length of the profiling die.

In order to achieve this result, the tool maker oftentimes has to vary the shape or profile of the flow diverters to insure that the velocity profiles of the rubber flow as it approaches the die are as uniform as possible. In practice, this requires the entire extruder head or separate flow channel component to be removed and transported to a location where the profiles of the flow diverters can be machined or manually grinded to a desired shape to achieve the desired flow balance through the profiling die. Once the extruder head or flow channel is returned for use in extruding strips of material, oftentimes it must be removed again for additional fine tuning to create the proper material flow characteristics through the flow channel. This movement of the extruder head or removable flow channel for adjustment purposes is cumbersome, time consuming and leads to potentially expensive downtime while the extruder head or removable flow channel is out of use for fine tuning.

Therefore, there is a need for an improved manner of balancing the flow of material through an extruder head such that the material flow has a generally constant velocity profile across the lateral length of the profile forming die during an extrusion process.

WO-A- 99/22927 describes an extruder head according to the preamble of claim 1. A similar extruder head is known from EP-A- 1 186 397.

### Summary of the invention

The present invention overcomes the foregoing shortcomings and drawbacks by the extruder as defined in claim 1 and by the method as defined in claim 9.

Particular embodiments of the invention are the subject of the dependent claims.

In accordance with the principles of the present invention, an extruder head is provided for forming one or more strips of polymeric material, such as one or more rubber tire treads for example. The extruder head includes a flow channel which is preferably bolted to or, alternatively, machined into the extruder head for conveying the polymeric material through the extruder head between a flow inlet end and a flow outlet end of the flow channel. The flow channel receives polymeric material from an extruder at the flow inlet end and discharges the polymeric material at the flow outlet end preferably through a die for forming the profile of the polymeric material to be produced. The die preferably has one or more openings configured to form the polymeric material into one or more strips having the proper predetermined cross-sectional profile.

In one embodiment, a flow dam is provided in the flow channel for separating the flow channel into a first flow passage and a second flow passage. The flow dam effectively balances the amount of material mass flowing through each of the first and second flow passages so that they are approximately equal in mass of material being conveyed through each of the flow passages.

Preferably, a pair of flow diverters are provided in the flow channel, with each flow diverter being located in one of the flow passages proximate the flow outlet end of the flow channel. More preferred, each flow diverter is generally triangular in shape and includes a leading apex directed toward the flow inlet end of the flow channel. Preferably, each flow diverter has a particular profile or shape, and orientation within the respective flow passages, so that the polymeric material has a velocity profile that is generally constant across the lateral length of the profile forming die.

In accordance with the principles of the present invention, the flow diverters are removably secured within the flow channel of the extruder head such that the flow diverters can be easily removed and reshaped or reprofiled as may be necessary to achieve the desired velocity profile of the polymeric material flow at the profile forming die. In one embodiment, threaded fasteners are provided which extend through bores formed through the flow diverters. The threaded ends of the fasteners preferably engage threaded bores formed in the extruder head or removable flow channel such that the flow diverters are held securely in place within the flow channel of the extruder head, and can be easily removed as may be necessary simply by removing the fasteners. In this way, each flow diverter, which may weigh about 10 pounds, can be unbolted from the extruder head or removable flow channel and transported to any location for adjustment in its shape or profile by machining or manual grinding so that the desired velocity profile at the profile forming die is achieved.

This capability to remove and transport the flow diverters for adjustment greatly simplifies the prior adjustment process which required the massive one-piece extruder head or the removable flow channel to be removed and transported for machining or manual grinding. By removably securing the flow diverters within the flow channel of the extruder head, considerable time and expense is saved for adjusting the flow properties of the flow channel since now only the relatively light weight flow diverters need be removed and transported for adjustment.

### Brief Description of the Drawings

The accompanying drawings, illustrate examples of the invention.
Figure 1 is a top plan view of a dual cavity extruder head having a pair of flow diverters removably secured within the flow channel of the extruder head in accordance with one embodiment of the present invention;
Figure 2 is a cross-sectional view taken along line 2-2 of Figure 1;
Figure 3 is a perspective view of the dual cavity extruder head of Figure 1, showing one of the flow diverters unconnected and removed from the flow channel of the extruder head;
Figure 4 is a view similar to Figure 3, showing the pair of flow diverters removably secured within the flow channel of the extruder head through a plurality of fasteners;
Figure 5 is a top plan view of a single cavity extruder head having a flow diverter removably secured within the flow channel of the extruder head in accordance with another embodiment of the present invention;
Figure 6 is a cross-sectional view taken along line 6-6 of Figure 5;
Figure 7 is a perspective view of the single cavity extruder head of Figure 5, showing the flow diverter unconnected and removed from the flow channel of the extruder head; and
Figure 8 is a view similar to Figure 7, showing the flow diverter removably secured within the flow channel of the extruder head through a plurality of fasteners.

### Detailed Description of the Preferred Example

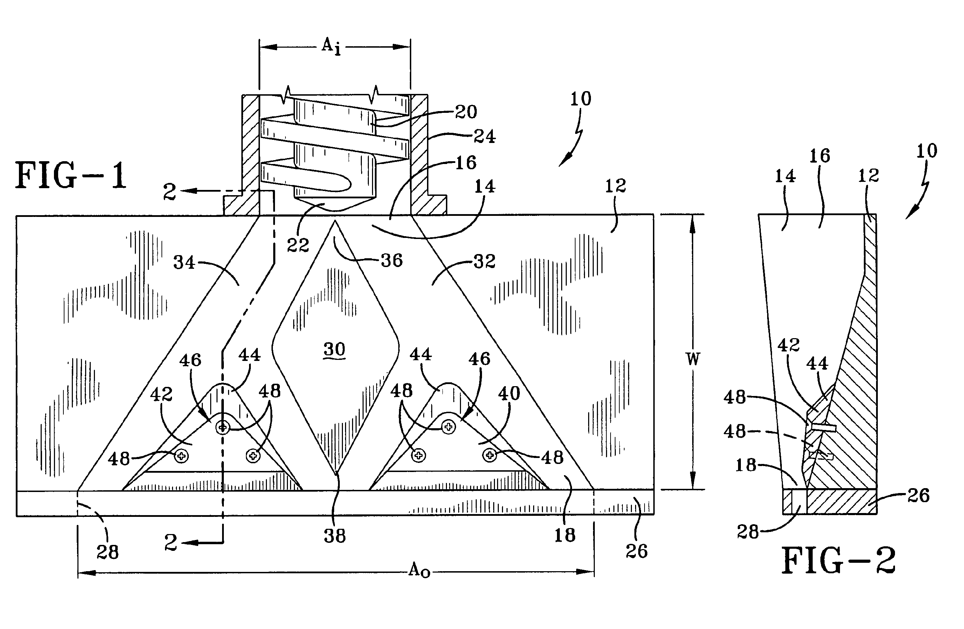

Referring now to the Figures, and to Figure 1 in particular, an extrusion system 10 is shown in accordance with one embodiment of the present invention having a dual cavity extruder head 12 for forming one or more strips of polymeric material, such as one or more rubber tire treads by way of example. In one embodiment, the extruder head 12 is made of metal such as steel, and has a flow channel 14 machined therein for conveying polymeric material, including plasticized and elastomeric materials, through the extruder head 12 between a flow inlet end 16 and a flow outlet end 18 of the flow channel 14 as will be described in more detail below. As shown in Figure 1, the flow inlet end 16 of the flow channel 14 has a predetermined cross-sectional area defined by a diameter "A," and the flow outlet end 18 has a predetermined cross-sectional area defined by "Aₒ" and some gauge. While not shown, it will be appreciated by those of ordinary skill in the art that the flow channel may alternatively comprise a separate and removable component, typically made of steel, which is bolted to the extruder head 12. As used herein, the term "flow channel" is intended to include both a flow channel 14 which is machined into the extruder head 12 and a flow channel which is a separate and removable component bolted to the extruder head 12.

Further referring to Figure 1, an extruder (not shown) well known in the art is connected to the extruder head 12 proximate the flow inlet end 16 of the flow channel 14. The extruder (not shown) includes an extruder screw 20 enclosed in an extruder barrel 24 and having a screw tip 22 on the discharge end of the screw. The flow channel 14 receives polymeric material from the extruder (not shown) at the flow inlet end 16 and discharges the polymeric material at the flow outlet end 18 through a die 26 for forming the profile of the polymeric strip to be produced. The die 26 is commonly referred to as a discharge die or profile forming die and has one or more openings 28 (Figure 2) configured to form the polymeric material into one or more strips having the proper predetermined cross-sectional profile.

As shown in the example of Figure 1, a flow dam 30 is positioned in the flow channel 14 for separating the flow channel 14 into a first flow passage 32 and a second flow passage 34. The flow dam 30 includes a leading apex 36 directed toward the flow inlet end 16 and a trailing apex 38 directed toward the flow outlet end 18. In one embodiment, the leading apex 36 of the flow dam 30 is symmetrically oriented relative to the flow inlet end 16 of the flow channel 14 to effectively balance the amount of material mass flowing through each of the first and second flow passages 32, 34 so that they are approximately equal in mass of material. In another embodiment, additional flow diverting structure (not shown) may be provided at the leading apex 36 of the flow dam 30 to redistribute the mass of polymeric material flowing through the first and second flow passages 32, 34 so that there is effectively a balance of material mass flowing through the first and second flow passages 32, 34. Although not required, the flow dam 30 can extend the full length "W" of the flow channel 14, thereby completely separating the first flow passage 32 from the second flow passage 34 at the flow outlet end 18 of the flow channel 14. In this instance, the profile forming die 26 may include a pair of openings 28 to simultaneously produce a pair of profiled polymeric strips, one being formed from each flow passage 32 and 34.

Further referring to Figures 1 and 2, it will be seen that at least one or both of the surfaces of the flow channel 14 tapers inwardly from the flow inlet end 16 to the flow outlet end 18. The flow passages 32, 34 further elongate laterally so as to flatten the cross-sectional area as the polymeric material flow approaches the flow outlet end 18 of the flow channel 14 and prior to entering into the extruder profile forming die 26.

As shown in Figures 1-4, a pair of flow diverters 40, 42, made of metal such as steel, are positioned within the flow channel 14, with each flow diverter 40, 42 being located in one of the flow passages 32, 34 proximate the flow outlet end 18 of the flow channel 14. Each flow diverter 40, 42 is generally triangular in shape and includes a leading apex 44 directed toward the flow inlet end 16 of the flow channel 14. Each flow diverter 40, 42 has a particular profile or shape, and orientation within the respective flow passage 32, 34, so that the polymeric material has a velocity profile that is generally constant or as desired across the lateral length of the die 26 as it enters the die 26 at the flow outlet end 18 of the flow channel 14. It is believed that the apex 44 of each flow diverter 40, 42 should be positioned so that it impinges normal to the velocity profile of the polymeric material flowing within each respective flow passages 32, 34. If the material impinges the flow diverters 40, 42 with an angular flow, it is believed that the flow diverters 40, 42 should be asymmetrically positioned to insure that they intercept at the maximum flow velocity within the flow channel 14. If the flow channel 14 is provided such that the velocity profile of the polymeric flow in each flow passage 32, 34 is symmetrical prior to the leading apexes 44, then it is presumed that the flow diverters 40, 42 could be positioned symmetrically within the flow channel 14 near the flow outlet end 18 because in that construction the maximum flow velocity would be presumed to be at the midpoint of each flow passage 32, 34 or in close proximity thereto. In one embodiment, as shown in Figure 2, each flow diverter 40, 42 occupies about 40 percent or more of the full depth of the flow passages 32, 34 in the area where the flow diverters 40, 42 are located. The height of the flow diverters 40, 42 can vary depending on operating conditions and the desired exit velocity profile.

As described above, the flow diverters 40, 42 are shaped or profiled so that the polymeric material flow has a velocity profile that is generally constant across the lateral length of the die 26 as it enters the die 26 at the flow outlet end 18 of the flow channel 14. In accordance with the principles of the present invention, and as shown in Figures 1-4, the flow diverters 40, 42 are removably secured within the flow channel 14 of the extruder head 12 such that the flow diverters 40, 42 can be easily removed and reshaped or reprofiled as may be necessary to achieve the desired velocity profile of the polymeric material flow at the flow outlet end 18 of the flow channel 14.

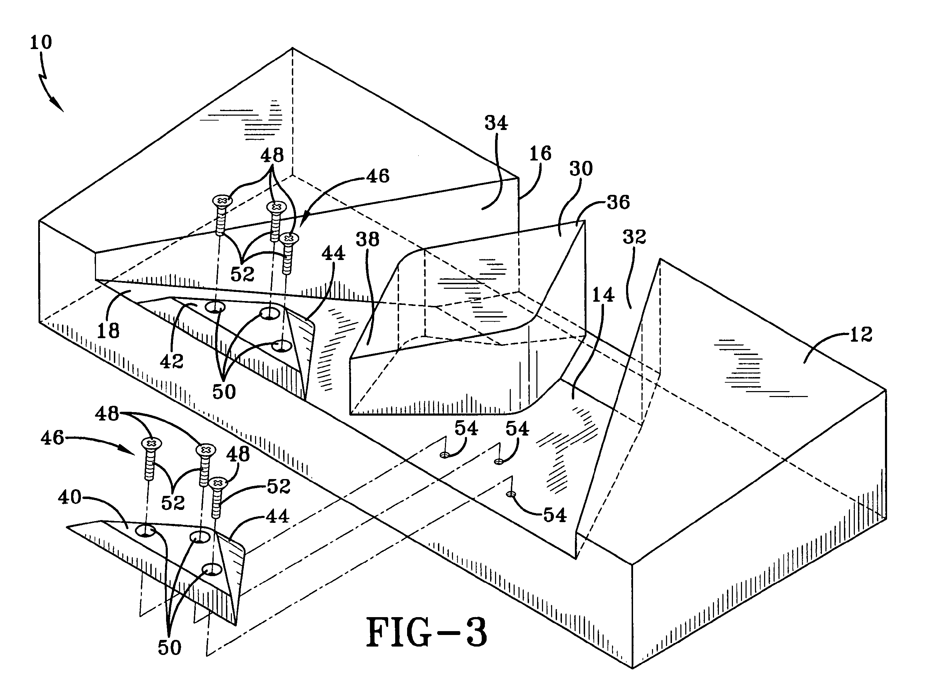

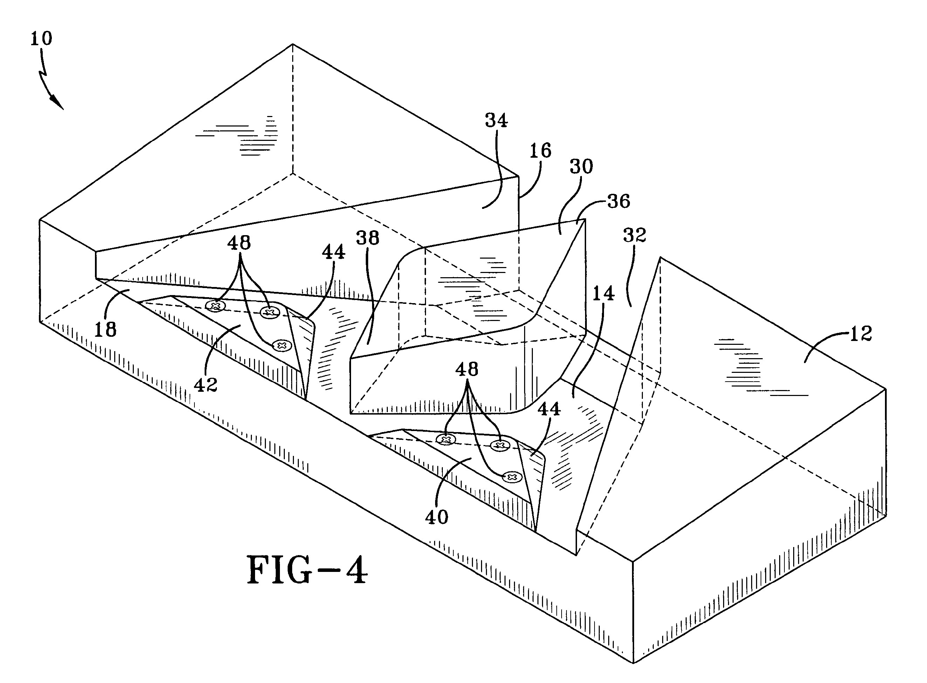

In one example, as shown in Figures 1-4, fastening mechanisms 46, such as threaded fasteners 48, are provided which extend through bores 50 (Figure 3) formed through the flow diverters 40, 42. The threaded ends 52 (Figure 3) of the fasteners 48 engage threaded bores 54 (Figure 3) formed in the extruder head 12 such that the flow diverters 40, 42 are held securely in place within the flow channel 14 as shown in Figure 4, and can be easily removed, as may be necessary, simply by removing the fasteners 48 as shown in Figure 3. In this way, each flow diverter 40, 42, which may weigh about 10 pounds, can be unbolted from the extruder head 12 and transported to any location for adjustment in its shape or profile by machining or by manual grinding so that the desired velocity profile at the flow outlet end 18 of the flow channel 14 is achieved. This capability to remove and transport the flow diverters 40, 42 for adjustment greatly simplifies the prior adjustment process which required the massive one-piece extruder head, which may weigh about 1,000 pounds or more, to be removed and transported for machining or manual grinding. By removably securing the flow diverters 40, 42 within the flow channel 14 of the extruder head 12, considerable time and expense is saved for adjusting the flow properties of the flow channel 14 since now only the flow diverters 40, 42 need be removed and transported for adjustment.

While fasteners 48 are shown for removably securing the flow diverters 40, 42 within the flow channel 14 of the extruder head 12, it is contemplated that other mechanical fastening systems are possible as well which will serve to securely connect the flow diverters 40, 42 to the extruder head 12, yet allow the flow diverters 40, 42 to be easily removed as may be necessary for adjustment. The present invention contemplates any fastening mechanism which will provide this desired function as will be appreciated by those of ordinary skill in the art. To this end, it is contemplated that the fastening mechanisms may comprise separate components, such as bolts, screws, or any other releasably securable fastening devices, which provide the desired fastening function. Alternatively, it is contemplated that the fastening mechanisms may be integrally formed on the flow diverters 40, 42, the extruder head 12, or both, such that the integral fastening mechanisms releasably secure the flow diverters 40, 42 within the flow channel 14 of the extruder head 12 in a secure but easily removable fashion.

While not shown, it will be readily appreciated that the flow diverters 40, 42 are adapted to be similarly removably connected to a removable flow channel (not shown) when such a component is used in combination with the extruder head 12. In this example, the removable flow channel (not shown) includes threaded bores (not shown) for receiving the threaded ends 52 (Figure 3) of the fasteners 48 to removably secure the flow diverters 40, 42 to the removable flow channel (not shown).

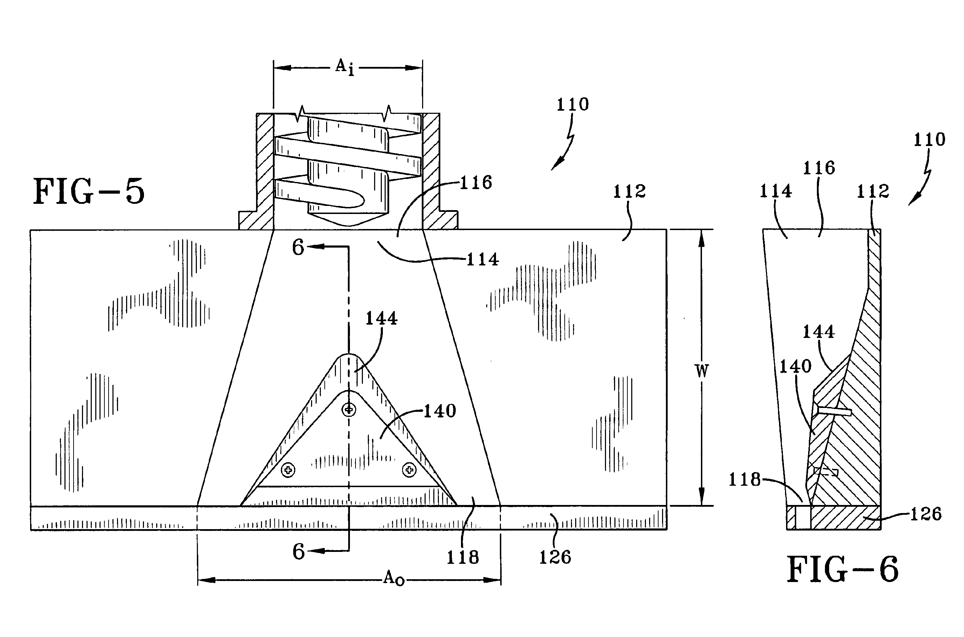

Referring now to Figures 5-8, an extrusion system 110 is shown in accordance with another example of the present invention having a single cavity extruder head 112, where like numerals represent like parts to the extrusion system 10 of Figures 1-4. In this example, the single cavity extruder head 112 has a flow channel 114 machined therein for conveying polymeric material through the extruder head 112 between a flow inlet end 116 and a flow outlet end 118 of the flow channel 114.

As shown in Figure 6, at least one or both of the surfaces of the flow channel 114 tapers inwardly from the flow inlet end 116 to the flow outlet end 118 of the flow channel 114 so as to flatten the cross-sectional area as the polymeric material flow approaches the flow outlet end 118 of the flow channel 114 and prior to entering into the extruder profile forming die 126.

In this example, a single flow diverter 140 is removably secured within the flow channel 114 proximate the flow outlet end 118 of the flow channel 114. The flow diverter 140 is generally triangular in shape and includes a leading apex 144 directed toward the flow inlet end 116 of the flow channel 114. Similar to the flow diverters 40, 42 of the dual cavity extruder head 12, the flow diverter 140 is shaped or profiled so that the polymeric material flow has a velocity profile that is generally constant or as desired across the lateral length of the die 126 as it enters the die 126 at the flow outlet end 118 of the flow channel 114.

The flow diverter 140 is removably secured within the flow channel 114 of the extruder head 112 so that the flow diverter 140 can be easily removed and reshaped or reprofiled as necessary to achieve the desired velocity profile of the polymeric material flow at the flow outlet end 118 of the flow channel 114.

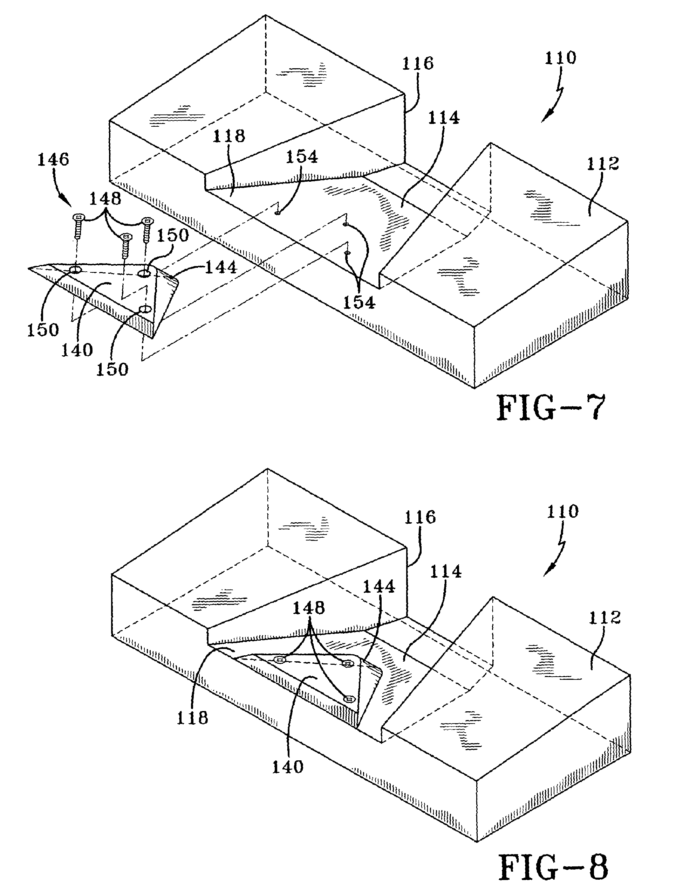

As with the dual cavity extruder head 12 of Figures 1-4, the single cavity extruder head 112 includes fastening mechanisms 146 (Figure 7), such as threaded fasteners 148 (Figure 7), which extend through bores 150 (Figure 7) formed through the flow diverter 140 and engage with threaded bores 154 (Figure 7) formed in the extruder head 112. In this way, the flow diverter 140 is held securely in place within the flow channel 114 as shown in Figure 8, and can be easily removed as may be necessary for adjustment simply by removing the fasteners 148 as shown in Figure 7. Of course, alternative fastening mechanisms, such as those described in detail above, which function to releasably secure the flow diverter 140 to the extruder head 112 are contemplated as well.

While not shown, it will be readily appreciated that the flow diverter 140 is adapted to be similarly removably connected to a removable flow channel (not shown) when such a component is used in combination with the extruder head 112.

## Claims

1. An extruder (10, 110) for use in forming at least one strip of polymeric material, comprising an extruder head (12, 112), a flow channel (14, 114) associated with the extruder head (12, 112) and having a flow inlet end (16, 116) and a flow outlet end (18, 118), and a flow diverter (40, 42, 140, 142) within the flow channel (14, 114) of the extruder head (12, 112), **characterized in that** the flow diverter (40, 42, 140, 142) is removably secured within the flow channel (14, 114).

2. The extruder according to claim 1, wherein the flow diverter is positioned within the flow channel and has at least one bore (50, 150) extending therethrough, and wherein at least one fastener (48, 148) is extending through the bore (50, 150) of the flow diverter and is removably securing the flow diverter within the flow channel of the extruder head.

3. The extruder according to claim 1, further comprising a fastening mechanism (46, 146) operable to removably secure the flow diverter within the flow channel of the extruder head, preferably wherein the fastening mechanism (46, 146) comprises at least one fastener (48, 148) removably securing the flow diverter within the flow channel of the extruder head.

4. The extruder according to at least one of the preceding claims, further comprising a flow dam (30) positioned within the flow channel proximate the inlet end and separating the flow channel into a first flow passage (32) and a second flow passage (34), preferably comprising a pair of flow diverters (40, 42, 140, 142) removably secured within the flow channel of the extruder head, each of the pair of flow diverters being located in one of the first and second flow passages (32, 34).

5. The extruder according to at least one of the preceding claims, further comprising a plurality of fastening mechanisms (46, 146) operable to removably secure the pair of flow diverters within the flow channel of the extruder head and/or wherein each fastening mechanism (46, 146) comprises at least one fastener (48, 148) removably securing one of the flow diverters within the flow channel of the extruder head.

6. The extruder according to at least one of the preceding claims, further comprising a profile forming die (26, 126) connected to the extruder head proximate the flow outlet end of the flow channel.

7. The extruder according to at least one of the preceding claims, further comprising a pair of flow diverters (40, 42, 140, 142) removably secured within the flow channel of the extruder head, each of the pair of flow diverters being located in one of the first and second flow passages (32, 34) and having at least one bore (50, 150) extending therethrough.

8. The extruder according to at least one of the preceding claims, further comprising at least one fastener (48, 148) extending through the bore (50) of each flow diverter and removably securing the flow diverters within the flow channel of the extruder head.

9. A method of making an extruder head for use in forming at least one strip of polymeric material, the method comprising associating a flow channel (14, 114) with the extruder head (12, 112), the flow channel having a flow inlet end (16, 116) and a flow outlet end (18, 118), and removably securing a flow diverter (40, 42, 140, 142) within the flow channel of the extruder head, wherein the securing step comprises forming at least one bore (50, 150) through the flow diverter, and extending a fastening mechanism (46, 146) through the bore of the flow diverter to removably secure the flow diverter within the flow channel of the extruder head.

10. The method of claim 9 further comprising connecting a profile forming die (26, 126) to the extruder head proximate the flow outlet end of the flow channel.

## Patentansprüche

1. Extruder (10, 110) zur Verwendung beim Formen mindestens eines Streifens aus Polymermaterial, umfassend einen Extruderkopf (12, 112), einen Strömungskanal (14, 114), der dem Extruderkopf (12, 112) zugeordnet ist und ein Strömungs-Einlassende (16, 116) und ein Strömungs-Auslassende (18, 118) aufweist, und eine Strömungsumlenkeinrichtung (40, 42, 140, 142) in dem Strömungskanal (14, 114) des Extruderkopfs (12, 112), **dadurch gekennzeichnet, dass** die Strömungsumlenkeinrichtung (40, 42, 140, 142) lösbar in dem Strömungskanal (14, 114) gesichert ist.

2. Extruder nach Anspruch 1, wobei die Strömungsumlenkeinrichtung in dem Strömungskanal positioniert ist und mindestens eine sich durch diesen erstreckende Bohrung (50, 150) aufweist, und wobei mindestens ein Befestigungselement (48, 148) sich durch die Bohrung (50, 150) der Strömungsumlenkeinrichtung hindurch erstreckt und die Strömungsumlenkeinrichtung lösbar in dem Strömungskanal des Extruderkopfs sichert.

3. Extruder nach Anspruch 1, weiter einen Befestigungsmechanismus (46, 146) umfassend, der betreibbar ist, um die Strömungsumlenkeinrichtung lösbar in dem Strömungskanal des Extruderkopfs zu sichern, wobei der Befestigungsmechanismus (46, 146) bevorzugt mindestens ein Befestigungselement (48, 148) umfasst, das die Strömungsumlenkeinrichtung lösbar in dem Strömungskanal des Extruderkopfs sichert.

4. Extruder nach mindestens einem der vorgenannten Ansprüche, weiter einen Strömungsdamm (30) umfassend, der in dem Strömungskanal proximal zu dem Einlassende positioniert ist und den Strömungskanal in einen ersten Strömungsdurchlass (32) und einen zweiten Strömungsdurchlass (34) unterteilt, bevorzugt ein Paar von Strömungsumlenkeinrichtungen (40, 42, 140, 142) umfassend, die lösbar in dem Strömungskanal des Extruderkopfs gesichert sind, wobei jede des Paars von Strömungsumlenkeinrichtungen sich in einem des ersten und des zweiten Strömungsdurchlasses (32, 34) befindet.

5. Extruder nach mindestens einem der vorgenannten Ansprüche, weiter eine Mehrzahl von Befestigungsmechanismen (46, 146) umfassend, die betreibbar sind, um das Paar von Strömungsumlenkeinrichtungen lösbar in dem Strömungskanal des Extruderkopfs zu sichern und/oder wobei jeder Befestigungsmechanismus (46, 146) mindestens ein Befestigungselement (48, 148) umfasst, das eine der Strömungsumlenkeinrichtungen lösbar in dem Strömungskanal des Extruderkopfs sichert.

6. Extruder nach mindestens einem der vorgenannten Ansprüche, weiter ein Profilformgebungs-Extrusionswerkzeug (26, 126) umfassend, das proximal zu dem Strömungs-Auslassende des Strömungskanals mit dem Extruderkopf verbunden ist.

7. Extruder nach mindestens einem der vorgenannten Ansprüche, weiter ein Paar von Strömungsumlenkeinrichtungen (40, 42, 140, 142) umfassend, die lösbar in dem Strömungskanal des Extruderkopfs gesichert sind, wobei jede des Paars von Strömungsumlenkeinrichtungen sich in einem des ersten und des zweiten Strömungsdurchlasses (32, 34) befindet und mindestens eine sich durch diese hindurch erstreckende Bohrung (50, 150) aufweist.

8. Extruder nach mindestens einem der vorgenannten Ansprüche, weiter mindestens ein Befestigungselement (48, 148) umfassend, das sich durch die Bohrung (50) jeder Strömungsumlenkeinrichtung erstreckt und die Strömungsumlenkeinrichtungen lösbar in dem Strömungskanal des Extruderkopfs sichert.

9. Verfahren zur Herstellung eines Extruderkopfs zur Verwendung beim Formen mindestens eines Streifens aus Polymermaterial, wobei das Verfahren das Zuordnen eines Strömungskanals (14, 114) zu dem Extruderkopf (12, 112), wobei der Strömungskanal ein Strömungs-Einlassende (16, 116) und ein Strömungs-Auslassende (18, 118) aufweist, und das lösbar Sichern einer Strömungsumlenkeinrichtung (40, 42, 140, 142) in dem Strömungskanal des Extruderkopfs umfasst, wobei der Sicherungsschritt das Ausbilden mindestens einer Bohrung (50, 150) durch die Strömungsumlenkeinrichtung und das Erstrecken eines Befestigungsmechanismus (46, 146) durch die Bohrung der Strömungsumlenkeinrichtung umfasst, um die Strömungsumlenkeinrichtung lösbar in dem Strömungskanal des Extruderkopfs zu sichern.

10. Verfahren nach Anspruch 9, weiter das Verbinden eines Profilformgebungs-Extrusionswerkzeugs (26, 126) mit dem Extruderkopf proximal zu dem Strömungs-Auslassende des Strömungskanals umfassend.

## Revendications

1. Extrudeuse (10, 110) à utiliser pour former au moins une bande de matière polymère, comprenant une tête d'extrudeuse (12, 112), un canal d'écoulement (14, 114) associé à la tête d'extrudeuse (12, 112) et possédant une extrémité d'entrée d'écoulement (16, 116) et une extrémité de sortie d'écoulement (18, 118) et un inverseur d'écoulement (40, 42, 140, 142) à l'intérieur du canal d'écoulement (14, 114) de la tête d'extrudeuse (12, 112), **caractérisé en ce que** l'inverseur d'écoulement (40, 42, 140, 142) est fixé de manière amovible à l'intérieur du canal d'écoulement (14, 114).

2. Extrudeuse selon la revendication 1, dans laquelle l'inverseur d'écoulement est disposé à l'intérieur du canal d'écoulement et possède au moins un alésage (50, 150) s'étendant à travers lui, et dans laquelle au moins un dispositif de fixation (48, 148) s'étend à travers l'alésage (50, 150) et fixe de manière amovible l'inverseur d'écoulement à l'intérieur du canal d'écoulement de la tête d'extrudeuse.

3. Extrudeuse selon la revendication 1, comprenant en outre un mécanisme de fixation (46, 146) qui peut être actionné pour fixer de manière amovible l'inverseur d'écoulement à l'intérieur du canal d'écoulement de la tête d'extrudeuse, de préférence dans laquelle le mécanisme de fixation (46, 146) comprend au moins un dispositif de fixation (48, 148) fixant de manière amovible l'inverseur d'écoulement à l'intérieur du canal d'écoulement de la tête d'extrudeuse.

4. Extrudeuse selon au moins une des revendications précédentes, comprenant en outre une digue d'écoulement (30) disposée à l'intérieur du canal d'écoulement à proximité de l'extrémité d'entrée et séparant le canal d'écoulement en un premier passage d'écoulement (32) et en un deuxième passage d'écoulement (34), de préférence comprenant une paire d'inverseurs d'écoulement (40, 42, 140, 142) fixés de manière amovible à l'intérieur du canal d'écoulement de la tête d'extrudeuse, une paire d'inverseurs d'écoulement étant respectivement disposée dans le premier et dans le deuxième passage d'écoulement (32, 34).

5. Extrudeuse selon au moins une des revendications précédentes, comprenant en outre plusieurs mécanismes de fixation (46, 146) qui peuvent être actionnés pour fixer de manière amovible la paire d'inverseurs d'écoulement à l'intérieur du canal d'écoulement de la tête d'extrudeuse et/ou dans laquelle chaque mécanisme de fixation (46, 146) comprend au moins un dispositif de fixation (48, 148) fixant de manière amovible un des inverseurs d'écoulement à l'intérieur du canal d'écoulement de la tête d'extrudeuse.

6. Extrudeuse selon au moins une des revendications précédentes, comprenant en outre une filière de configuration de profil (26, 126) reliée à la tête d'extrudeuse à proximité de l'extrémité de sortie d'écoulement du canal d'écoulement.

7. Extrudeuse selon au moins une des revendications précédentes, comprenant en outre une paire d'inverseurs d'écoulement (40, 42, 140, 142) fixés de manière amovible à l'intérieur du canal d'écoulement de la tête d'extrudeuse, une paire d'inverseurs d'écoulement étant respectivement disposée dans le premier et dans le deuxième passage d'écoulement (32, 34) et possédant au moins un alésage (50, 150) s'étendant à travers.

8. Extrudeuse selon au moins une des revendications précédentes, comprenant en outre au moins un dispositif de fixation (48, 148) s'étendant à travers l'alésage (50) de chaque inverseur d'écoulement et fixant de manière amovible un des inverseurs d'écoulement à l'intérieur du canal d'écoulement de la tête d'extrudeuse.

9. Procédé de fabrication d'une tête d'extrudeuse à utiliser pour la formation d'au moins une bande de matière polymère, le procédé comprenant le fait d'associer un canal d'écoulement (14, 114) à la tête d'extrudeuse (12, 112), le canal d'écoulement possédant une extrémité d'entrée d'écoulement (16, 116) et une extrémité de sortie d'écoulement (18, 118), et de fixer de manière amovible un inverseur d'écoulement (40, 42, 140, 142) à l'intérieur du canal d'écoulement de la tête d'extrudeuse, l'étape de fixation comprenant le fait de former au moins un alésage (50, 150) à travers l'inverseur d'écoulement et le fait d'étendre un mécanisme de fixation (46, 146) à travers l'alésage de l'inverseur d'écoulement afin de fixer de manière amovible l'inverseur d'écoulement à l'intérieur du canal d'écoulement de la tête d'extrudeuse.

10. Procédé selon la revendication 9, comprenant en outre le fait de relier une filière de configuration de profil (26, 126) à la tête d'extrudeuse à proximité de l'extrémité de sortie d'écoulement du canal d'écoulement.
